# EUROPEAN PATENT APPLICATION

(11) **EP 4 811 622 A1**
(43) Date of publication of application: **23.09.2026**
(21) Application number: 26166132.6
(22) Date of filing: 19.03.2026
(51) Int. Cl.: H02K 7/116, H02K 7/00, F04C 2/10

(54) **RANGE-EXTENDED POWERTRAIN AND RANGE-EXTENDED ELECTRIC VEHICLE**

(30) Priority: 20.03.2025 CN 202510337083
(71) Applicant: HUAWEI TECHNOLOGIES CO., LTD., Shenzhen, Guangdong 518129 (CN)
(72) Inventor: DENG, Chengyi, Shenzhen, 518129 (CN); ZHENG, Jiwei, Shenzhen, 518129 (CN)
(74) Representative: Gill Jennings & Every LLP

(57) **Abstract**

This application provides a range-extended powertrain and a range-extended electric vehicle. The range-extended powertrain includes a mechanical pump and a generator. A housing of the mechanical pump includes a driven internal gear container. The driven internal gear container is configured to accommodate a driven internal gear of the mechanical pump. The driven internal gear of the mechanical pump engages with a driving external gear of the mechanical pump. The driving external gear of the mechanical pump is distributed on an inner part of the driven internal gear of the mechanical pump. A motor shaft of the generator is configured to fasten a motor rotor of the generator and extend into the driven internal gear container to fasten the driving external gear of the mechanical pump. The motor shaft of the generator serves as a transmission shaft of the mechanical pump, and the driving external gear of the mechanical pump is directly fastened and sleeved on the motor shaft, so that a differential or a gear group does not need to be separately disposed to be in transmission connection to the motor shaft and the transmission shaft of the mechanical pump. This reduces space occupied by the mechanical pump, and increase in an axial size of the range-extended powertrain is small, which is conducive to taking both miniaturization and low costs of the range-extended powertrain into consideration.

## Description

### TECHNICAL FIELD

This application relates to the field of motor technologies, and specifically, to a range-extended powertrain and a range-extended electric vehicle.

### BACKGROUND

An oil storage structure of a range-extended powertrain in a range-extended electric vehicle stores a large amount of oil to lubricate and cool the range-extended powertrain. In a conventional technology, an electronic pump has a simple structure and occupies small space. Usually, an electronic pump is configured to transfer cooling oil in the oil storage structure of the range-extended powertrain to a lubricating and cooling system of the range-extended powertrain. However, costs of the electronic pump are high. Consequently, the range-extended powertrain cannot take both miniaturization and low costs into consideration.

### SUMMARY

This application provides a range-extended powertrain and a range-extended electric vehicle. The range-extended powertrain uses a mechanical pump, and increase, caused by the mechanical pump, in an axial size of the range-extended powertrain is small. This is conducive to taking both miniaturization and low costs of the range-extended powertrain into consideration, saving space of the range-extended electric vehicle.

According to a first aspect, an embodiment of this application provides a range-extended powertrain. The range-extended powertrain includes a mechanical pump and a generator. A housing of the mechanical pump includes a driven internal gear container. The driven internal gear container is configured to accommodate a driven internal gear of the mechanical pump. The driven internal gear of the mechanical pump engages with a driving external gear of the mechanical pump. The driving external gear of the mechanical pump is distributed on an inner part of the driven internal gear of the mechanical pump. A motor shaft of the generator is configured to fasten a motor rotor of the generator and extend into the driven internal gear container to fasten the driving external gear of the mechanical pump.

In the range-extended powertrain provided in this embodiment of this application, the motor shaft of the generator serves as a transmission shaft of the mechanical pump. That is, the motor shaft of the generator and the transmission shaft of the mechanical pump are the same shaft. In addition, the driving external gear of the mechanical pump is directly fastened and sleeved on the motor shaft, so that a differential or a gear group does not need to be separately disposed to be in transmission connection to the motor shaft of the generator and the transmission shaft of the mechanical pump. This reduces space occupied by a transmission structure of the mechanical pump, and reduces increase, caused by the mechanical pump, in an axial size of the range-extended powertrain, which is conducive to taking both miniaturization and low costs of the range-extended powertrain into consideration.

In an implementation, an end face of a rotor iron core of the motor rotor includes a mechanical pump accommodation container, and the mechanical pump accommodation container is concave toward a side facing away from the mechanical pump. The housing of the mechanical pump includes a bearing container, the bearing container is distributed on a side that is of the driven internal gear container and that faces the rotor iron core, and the bearing container is configured to fasten an outer ring of a bearing of the motor shaft. In an axial direction of the generator, a wall of the bearing container protrudes from a side that is of the housing of the mechanical pump and that faces the rotor iron core, and the wall of the bearing container is configured to extend into the mechanical pump accommodation container.

The mechanical pump accommodation container is disposed on the end face of the rotor iron core, and the protruding bearing container is placed in the mechanical pump accommodation container, to reduce increase, caused by the bearing container in the housing of the mechanical pump, in the axial size of the range-extended powertrain.

In addition, the bearing container configured to fasten the bearing of the motor shaft is integrated into the housing of the mechanical pump, and the housing and the bearing container of the mechanical pump can be made of a same material. Usually, the housing of the mechanical pump is made of a cast iron material. In other words, the bearing container integrated into the housing of the mechanical pump is also made of the cast iron material, so that rigidity of the bearing container can be improved. In this way, no steel sleeve needs to be disposed separately, which can reduce costs of the range-extended powertrain, and is also conducive to improving noise, vibration, and harshness (noise, vibration, and harshness, NVH) performance of the range-extended powertrain.

In an implementation, a pressure oil cavity of the mechanical pump is formed between the driven internal gear of the mechanical pump and the driving external gear of the mechanical pump. A bottom of the bearing container includes an oil outlet, and the oil outlet is configured to transfer oil in the pressure oil cavity of the mechanical pump to the bearing of the motor shaft.

The bearing container is integrated into the housing of the mechanical pump, so that oil in the pressure oil cavity of the mechanical pump is introduced into the bearing container through the internal oil channel of the housing, to lubricate and cool the bearing in the bearing container. In this way, a lubricating and cooling oil path of the bearing in the bearing container can be simplified, and the lubricating and cooling oil path of the bearing in the bearing container does not additionally increase the axial size of the range-extended powertrain.

In an implementation, a depth of the mechanical pump accommodation container in the axial direction of the generator is greater than or equal to a length by which the wall of the bearing container protrudes from the housing of the mechanical pump. In this way, internal space of the rotor iron core is fully utilized, to completely bury, in the mechanical pump accommodation container of the rotor iron core, the wall of the bearing container integrated into the housing of the mechanical pump, so that the bearing container does not additionally increase the axial size of the range-extended powertrain.

A center hole of a stator iron core of the generator is configured to accommodate the rotor iron core. A wire winding pack of the generator is exposed from the stator iron core in the axial direction of the generator. The housing of the mechanical pump is configured to accommodate the wire winding pack of a stator winding. In this way, internal space of the wire winding pack of the stator winding is fully utilized, to accommodate the housing of the mechanical pump in the wire winding pack, so that the housing of the mechanical pump does not additionally increase the axial size of the range-extended powertrain.

In an implementation, two housings of the range-extended powertrain enclose each other to form a motor cavity, the motor rotor and the mechanical pump are accommodated in the motor cavity, and the housing of the mechanical pump and one housing of the two housings are adjacently arranged and fastened.

The mechanical pump is disposed in the motor cavity of the range-extended powertrain, so that the housing of the range-extended powertrain can serve as a housing for forming the motor cavity, and also serve as a sealing cover of the mechanical pump. In this way, sealing performance of the mechanical pump can be ensured to facilitate stable running of the mechanical pump, and the axial size of the range-extended powertrain is not additionally increased.

In an implementation, the one housing includes a resolver bore that runs through the one housing in the axial direction of the generator. The resolver bore is configured to fasten a stator of a resolver sensor. A center hole of the stator of the resolver sensor is configured to accommodate a rotor of the resolver sensor. An end that is of the motor shaft and that extends into the driven internal gear container is exposed from the driven internal gear container, and the end of the motor shaft is configured to fasten the rotor of the resolver sensor. In this way, the housing of the motor cavity can be fully utilized, to reduce the axial size of the range-extended powertrain, which is conducive to miniaturization of the range-extended powertrain.

In an implementation, the housing of the mechanical pump includes a surface facing the one housing. The surface includes an oil inlet and an oil outlet. The oil inlet is configured to communicate with an oil absorption cavity of the mechanical pump, and the oil outlet is configured to communicate with an internal oil channel of the one housing and the pressure oil cavity of the mechanical pump.

The oil inlet and the oil outlet are disposed on the surface that is of the housing of the mechanical pump and that faces the one housing, adjacent to the housing of the mechanical pump, of the range-extended powertrain, so that an oil path between the mechanical pump and the housing of the range-extended powertrain can be shortened, and lubrication and cooling of the range-extended powertrain are accelerated.

In an implementation, the housing of the mechanical pump further includes two groups of fastening holes, the two groups of fastening holes are configured to fasten the housing of the mechanical pump to the one housing, and each group of fastening holes includes a plurality of fastening holes. A plurality of fastening holes in one group of fastening holes are configured to surround the oil inlet, and the plurality of fastening holes in the other group of fastening holes are configured to surround the oil outlet.

Fastening pieces in the one group of fastening holes can enable the oil inlet of the mechanical pump to be closely attached to the housing of the range-extended powertrain, so that oil extracted by the mechanical pump does not leak in a process of entering the housing of the mechanical pump. Fastening pieces in the other group of fastening holes can enable the oil outlet of the mechanical pump to be closely attached to the housing of the range-extended powertrain, so that oil in the pressure oil cavity of the mechanical pump does not leak in a process of entering the internal oil channel of the housing of the range-extended powertrain. In this way, oil utilization is improved.

According to a second aspect, a range-extended electric vehicle is provided. The range-extended electric vehicle includes wheels, a battery pack, and the range-extended powertrain according to any one of the first aspect and the implementations of the first aspect, and the generator is configured to supply power to the battery pack or a drive motor of the range-extended powertrain.

The range-extended powertrain provided in this embodiment of this application can take both miniaturization and low costs of the range-extended powertrain into consideration, to be conducive to saving space of the range-extended electric vehicle and improving driving experience of the electric vehicle.

### BRIEF DESCRIPTION OF DRAWINGS

FIG. 1 is a diagram of a range-extended electric vehicle according to an embodiment of this application;
FIG. 2 is a diagram of a generator according to an embodiment of this application;
FIG. 3 is a diagram of a motor rotor of a generator according to an embodiment of this application;
FIG. 4 and FIG. 5 each are a diagram of a rotor iron core according to an embodiment of this application;
FIG. 6 is a diagram of a housing of a range-extended powertrain according to an embodiment of this application;
FIG. 7 is a diagram of another range-extended powertrain according to an embodiment of this application;
FIG. 8 is a diagram of a mechanical pump according to an embodiment of this application;
FIG. 9 is a diagram of cooperation between a driven internal gear and a driving external gear of a mechanical pump according to an embodiment of this application;
FIG. 10 is a diagram of a housing of a mechanical pump according to an embodiment of this application;
FIG. 11 is a diagram of a motor shaft according to an embodiment of this application;
FIG. 12 is a diagram of another range-extended powertrain according to an embodiment of this application;
FIG. 13 is a diagram of another rotor iron core according to an embodiment of this application;
FIG. 14 is a diagram of another directly-connected rotor iron core according to an embodiment of this application; and
FIG. 15 is a diagram of a housing of a range-extended powertrain according to an embodiment of this application.

### DESCRIPTION OF EMBODIMENTS

The following describes technical solutions of this application with reference to accompanying drawings.

In this application, "equal" is not strictly equal, but within an allowable error range.

In embodiments of this application, a same reference numeral indicates a same component part or a same part or component. In embodiments of this application, for a plurality of same parts or components, only one part or component may be marked with a reference numeral as an example in the accompanying drawings. For another same part or component, the reference numeral is also applicable. In addition, dimensions and sizes of parts or components shown in the accompanying drawings are merely examples.

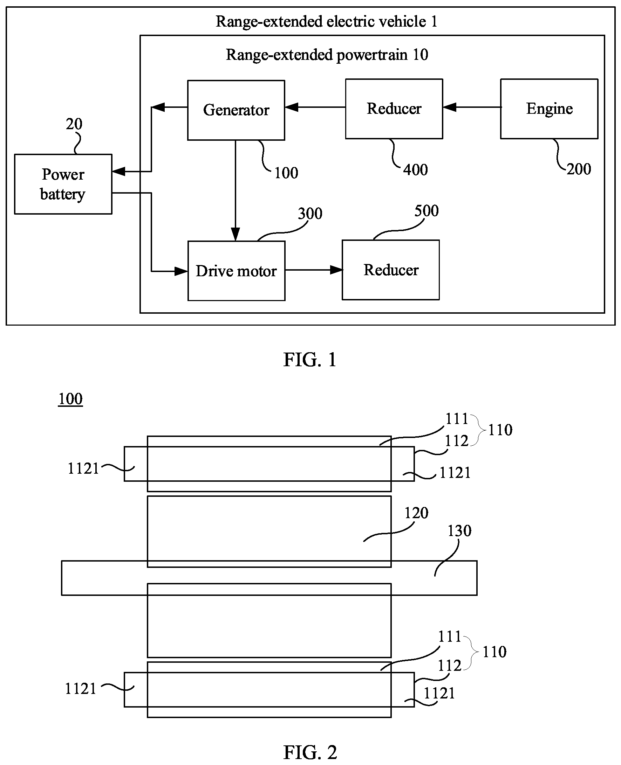

FIG. 1 is a diagram of a range-extended electric vehicle according to an embodiment of this application. The range-extended electric vehicle provided in embodiments of this application is also referred to as a range-extended electric vehicle, or is referred to as a REEV for short.

As shown in FIG. 1, the range-extended electric vehicle 1 includes a range-extended powertrain 10 and a power battery 20. The range-extended powertrain 10 is configured to receive power supplied by the power battery 20 and convert electric energy into mechanical energy to drive wheels of the range-extended electric vehicle 1.

As shown in FIG. 1, the range-extended powertrain 10 includes a generator 100, an engine 200, and a drive motor 300. The engine 200 is configured to be in transmission connection to the generator 100 and drive the generator 100 to generate power. The range-extended electric vehicle 1 may switch between a pure electric working mode and a range-extended working mode. When the range-extended electric vehicle 1 is in the pure electric working mode, the power battery 20 supplies power to the drive motor 300, to drive the range-extended electric vehicle 1. When the power battery 20 is at a low battery level or runs out of power, the engine 200 may be started, so that the range-extended electric vehicle 1 switches to the range-extended working mode. When the range-extended electric vehicle 1 is in the range-extended mode working mode, the engine 200 drives the generator 100 to generate power, and generated electric energy may be used to charge the power battery 20 or be provided for the electric energy for the drive motor 300.

In an embodiment, the range-extended powertrain 10 further includes at least one of two reducers 400 and 500. The engine 200 is configured to drive the generator 100 through the reducer 400. The drive motor 300 is configured to drive the wheels of the range-extended electric vehicle 1 through the reducer 500.

FIG. 2 is a diagram of a generator according to an embodiment of this application. As shown in FIG. 2, the generator 100 includes a motor stator 110, a motor rotor 120, and a motor shaft 130. The motor stator 110 is configured to accommodate the motor rotor 120, the motor rotor 120 is configured to be in transmission connection to the motor shaft 130, and the motor shaft 130 is configured to be in transmission connection to the engine 200. In a process in which the engine 200 controls the motor shaft 130 of the generator 100 to rotate, the motor shaft 130 drives the motor rotor 120 to rotate, and the motor rotor 120 rotates relative to the motor stator 110 to generate a magnetic field, so that the motor stator 110 generates an induced electromotive force to implement power generation of the generator 100.

As shown in FIG. 2, the motor stator 110 of the generator 100 includes a stator iron core 111 and a stator winding 112. A center hole of the stator iron core 111 is configured to accommodate the motor rotor 120. The stator winding 112 is wound around the stator iron core 111. In an embodiment, as shown in FIG. 2, the stator winding 112 includes two wire winding packs 1121, and the two wire winding packs 1121 are exposed from the stator iron core 111 in an axial direction of the generator 100.

In this embodiment of this application, the axial direction of the generator 100 may be understood as an axial direction of a rotor iron core 121, an axial direction of a directly-connected rotor iron core 1211, an axial direction of the finned rotor iron core 1212, an axial direction of the motor shaft 130, an axial direction of the motor stator 110, an axial direction of the motor rotor 120, and an axial direction of the stator iron core 111.

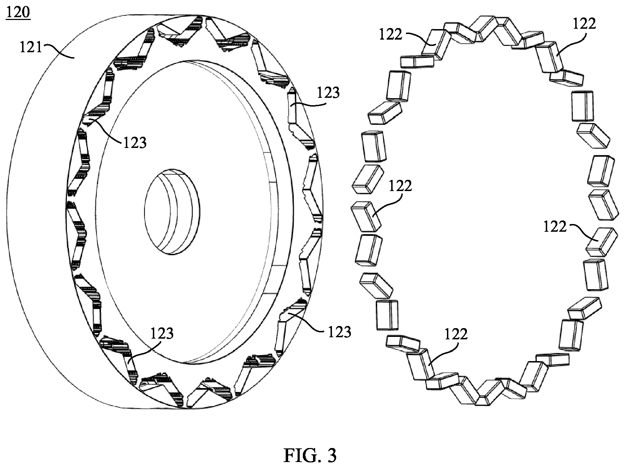

FIG. 3 is a diagram of a motor rotor of a generator according to an embodiment of this application. As shown in FIG. 3, the motor rotor 120 of the generator 100 includes the rotor iron core 121 and a plurality of magnets 122. The rotor iron core 121 includes a plurality of magnet through holes 123, the plurality of magnet through holes 123 of the rotor iron core 121 are spaced apart in a circumferential direction of the generator 100, and each magnet through hole 123 of the rotor iron core 121 is configured to accommodate one magnet 122. When the motor rotor 120 rotates relative to the motor stator 110, the magnet 122 in the magnet through hole 123 of the rotor iron core 121 generates a magnetic field, so that the stator winding of the motor stator 110 generates an induced electromotive force.

In this embodiment of this application, the circumferential direction of the generator 100 may be understood as a circumferential direction of the rotor iron core 121, a circumferential direction of the directly-connected rotor iron core 1211, a circumferential direction of the finned rotor iron core 1212, a circumferential direction of the motor shaft 130, a circumferential direction of the motor stator 110, a circumferential direction of the motor rotor 120, and a circumferential direction of the stator iron core 111.

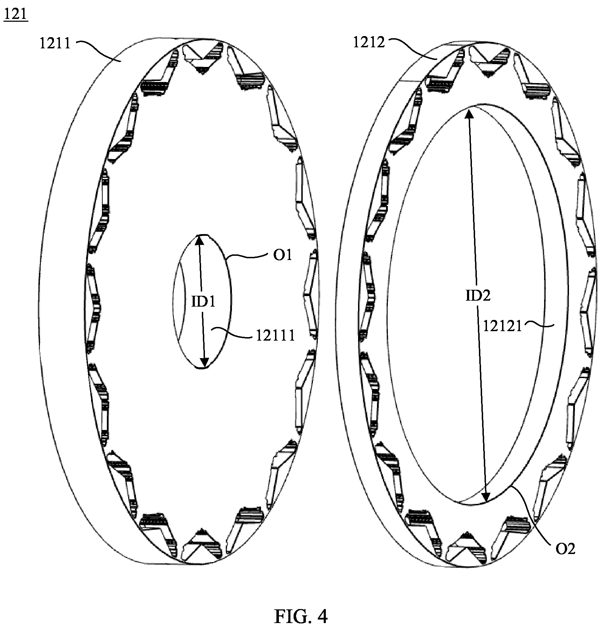

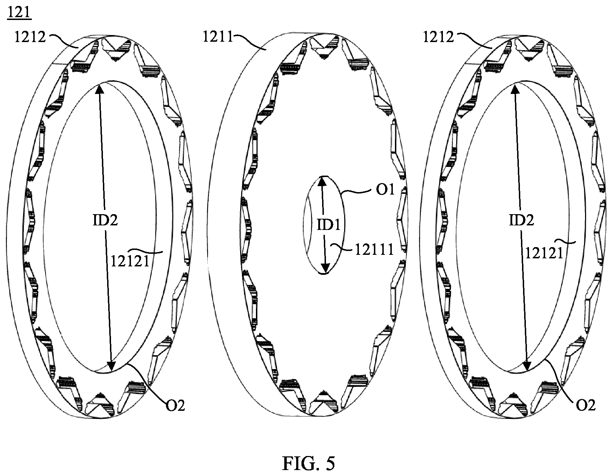

FIG. 4 and FIG. 5 each are a diagram of a rotor iron core according to an embodiment of this application. As shown in FIG. 4 and FIG. 5, the rotor iron core 121 includes the directly-connected rotor iron core 1211, and the directly-connected rotor iron core 1211 is fastened and sleeved on the motor shaft 130 of the generator 100. As shown in FIG. 4 and FIG. 5, the directly-connected rotor iron core 1211 includes a center hole O1. A hole wall of the center hole O1 of the directly-connected rotor iron core 1211 is an inner circumferential surface 12111 of the directly-connected rotor iron core 1211, and the inner circumferential surface 12111 of the directly-connected rotor iron core 1211 is in contact with an outer circumferential surface of the motor shaft 130.

In an embodiment, an inner diameter ID1 of the directly-connected rotor iron core 1211 is less than or equal to a diameter D1 of a shaft segment 131 that is of the motor shaft 130 and that extends into the directly-connected rotor iron core 1211. The inner diameter ID1 of the directly-connected rotor iron core 1211 is a diameter of the center hole O1 of the directly-connected rotor iron core 1211. In this way, the motor shaft 130 and the directly-connected rotor iron core 1211 are fastened in an interference fit manner, which simplifies a fastening manner between the motor shaft 130 and the directly-connected rotor iron core 1211.

As shown in FIG. 4 and FIG. 5, the rotor iron core 121 further includes the finned rotor iron core 1212, and the inner diameter ID1 of the directly-connected rotor iron core 1211 is less than an inner diameter ID2 of the finned rotor iron core 1212. Each finned rotor iron core 1212 includes a center hole O2, and a hole wall of the center hole O2 of each finned rotor iron core 1212 is an inner circumferential surface 12121 of each finned rotor iron core 1212. Because the inner circumferential surface 12111 of the directly-connected rotor iron core 1211 is in contact with the outer circumferential surface of the motor shaft 130, the inner circumferential surface 12121 of each finned rotor iron core 1212 is separated from the outer circumferential surface of the motor shaft 130.

In an embodiment, as shown in FIG. 4, the rotor iron core 121 includes the finned rotor iron core 1212. The finned rotor iron core 1212 and the directly-connected rotor iron core 1211 of the rotor iron core 121 are adjacently arranged in the axial direction of the generator 100. The finned rotor iron core 1212 of the rotor iron core 121 is fastened on a side of the directly-connected rotor iron core 1211 in the axial direction of the generator 100.

In an embodiment, as shown in FIG. 5, the rotor iron core 121 includes two finned rotor iron cores 1212a and 1212b. The two finned rotor iron cores 1212 of the rotor iron core 121 are arranged on two sides of the directly-connected rotor iron core 1211 in the axial direction of the generator 100, and the two finned rotor iron cores 1212 are respectively fastened on the two sides of the directly-connected rotor iron core 1211 in the axial direction of the generator 100.

In an embodiment, the finned rotor iron core 1212 and the directly-connected rotor iron core 1211 may be fastened by using a fastening piece, or through welding, bonding, or other fastening manners. The fastening piece includes a bolt, a screw, a rivet, or the like.

According to the generator 100 provided in this embodiment of this application, the directly-connected rotor iron core 1211 and the finned rotor iron core 1212 with different inner diameters are designed. The directly-connected rotor iron core 1211 with a smaller inner diameter is fastened to the motor shaft 130, and the finned rotor iron core 1212 with a larger inner diameter is fastened to the directly-connected rotor iron core 1211. In this way, rotation of the motor shaft 130 drives rotation of the directly-connected rotor iron core 1211, and rotation of the directly-connected rotor iron core 1211 drives rotation of the finned rotor iron cores 1212 on the two sides of the directly-connected rotor iron core 1211, so that the motor shaft 130 drives rotation of the rotor iron core 121. Further, the motor shaft 130 can drive the rotor iron core 121 to rotate without designing a wheel hub.

In addition, because the finned rotor iron core 1212 is fastened to the directly-connected rotor iron core 1211 and is not fastened to the motor shaft 130, compared with a diameter of the motor shaft 130, the inner diameter of the finned rotor iron core 1212 may be set to be larger. In this way, a structure of the finned rotor iron core 1212 can achieve weight reduction, and can further save space of the rotor iron core 121 in the axial direction of the generator 100. In other words, even if the wheel hub is not used, the rotor iron core 121 provided in this embodiment of this application can also achieve an objective of weight reduction and saving of space of the rotor iron core 121 in the axial direction of the generator 100 that is achieved by using the wheel hub.

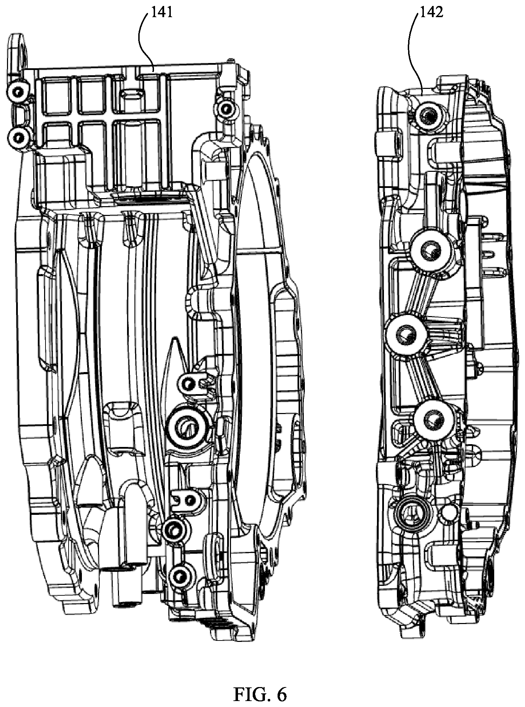

FIG. 6 is a diagram of a housing of a range-extended powertrain according to an embodiment of this application. As shown in FIG. 6, the range-extended powertrain 10 includes two housings 141 and 142, the two housings 141 and 142 enclose each other to form a motor cavity, and the motor cavity is configured to accommodate the motor stator 110 and the motor rotor 120 of the generator 100.

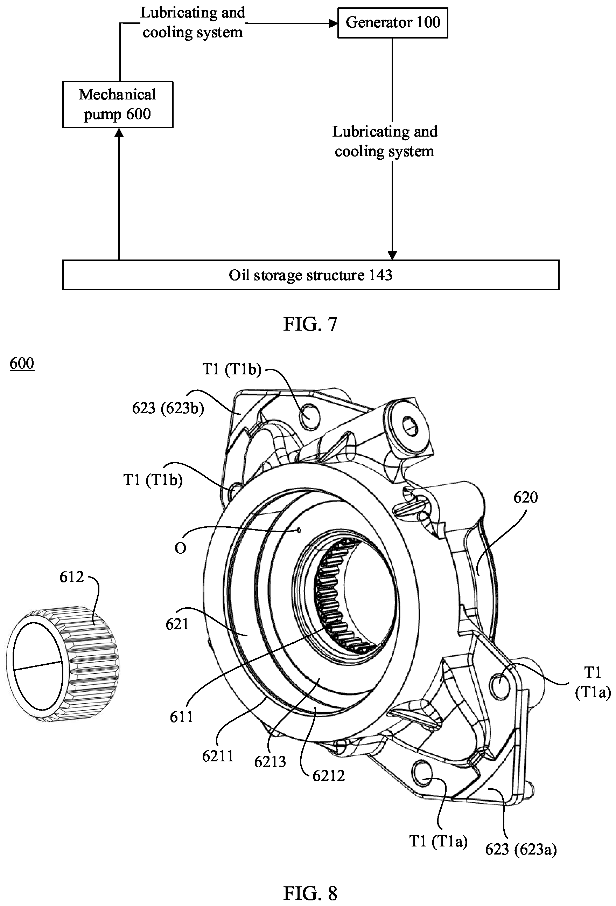

FIG. 7 is a diagram of another range-extended powertrain according to an embodiment of this application. As shown in FIG. 7, the range-extended powertrain 10 further includes an oil storage structure 143, and the oil storage structure 143 is configured to collect oil from the generator 100 through the lubricating and cooling system of the range-extended powertrain 10.

In an embodiment, the oil storage structure 143 is distributed on a same side of the two housings 141 and 142 of the range-extended powertrain 10. For example, the oil storage structure 143 is distributed on bottoms of the two housings 141 and 142 of the range-extended powertrain 10. In this way, under effect of gravity, oil in the two housings 141 and 142 of the range-extended powertrain 10 can automatically flow into the oil storage structure 143.

As described in the background, when cooling oil in the oil storage structure 143 of the range-extended powertrain 10 is transferred to the generator 100 through the lubricating and cooling system of the range-extended powertrain 10 by using an electronic pump, the range-extended powertrain 10 cannot take both miniaturization and low costs into consideration.

As shown in FIG. 7, the range-extended powertrain 10 further includes a mechanical pump 600. The mechanical pump 600 is configured to absorb oil in the oil storage structure 143, and transfer the absorbed oil to the lubricating and cooling system of the range-extended powertrain 10.

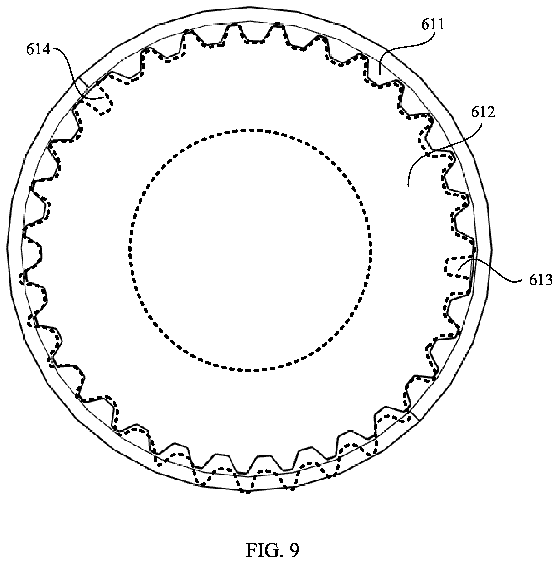

FIG. 8 is a diagram of a mechanical pump according to an embodiment of this application. FIG. 9 is a diagram of cooperation between a driven internal gear and a driving external gear of a mechanical pump according to an embodiment of this application. As shown in FIG. 8, the mechanical pump 600 includes the driven internal gear 611 and the driving external gear 612. As shown in FIG. 9, the driving external gear 612 is distributed on an inner side of the driven internal gear 611, and the driven internal gear 611 engages with the driving external gear 612. A quantity of teeth of the driven internal gear 611 is two less than a quantity of teeth of the driving external gear 612. In a process in which the driven internal gear 611 engages with the driving external gear 612, the driven internal gear 611 and the driving external gear 612 can respectively form, at two positions of the driven internal gear 611 with fewer teeth, a pressure oil cavity 613 of the mechanical pump 600 and an oil absorption cavity 614 of the mechanical pump 600 that are isolated from each other.

It should be understood that, as the driven internal gear 611 and the driving external gear 612 engage, the pressure oil cavity 613 of the mechanical pump 600 and the oil absorption cavity 614 of the mechanical pump 600 that are formed between the driven internal gear 611 and the driving external gear 612 change.

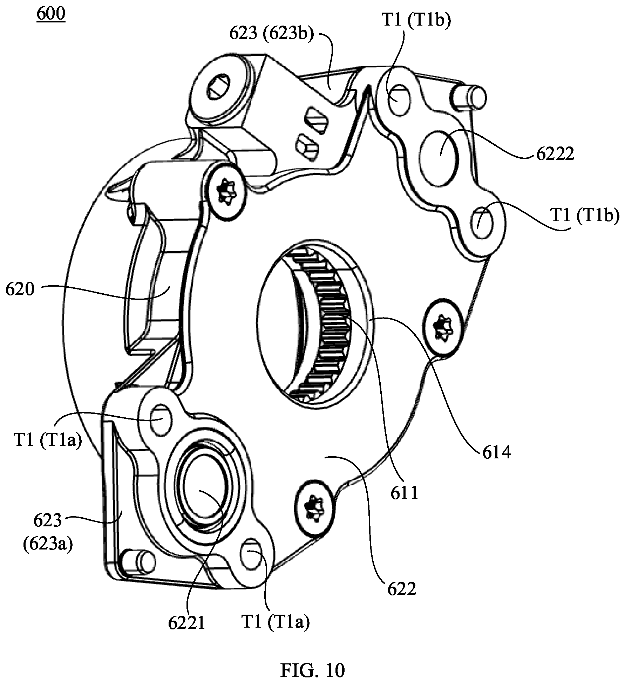

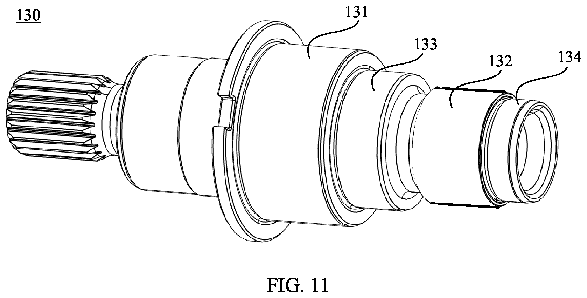

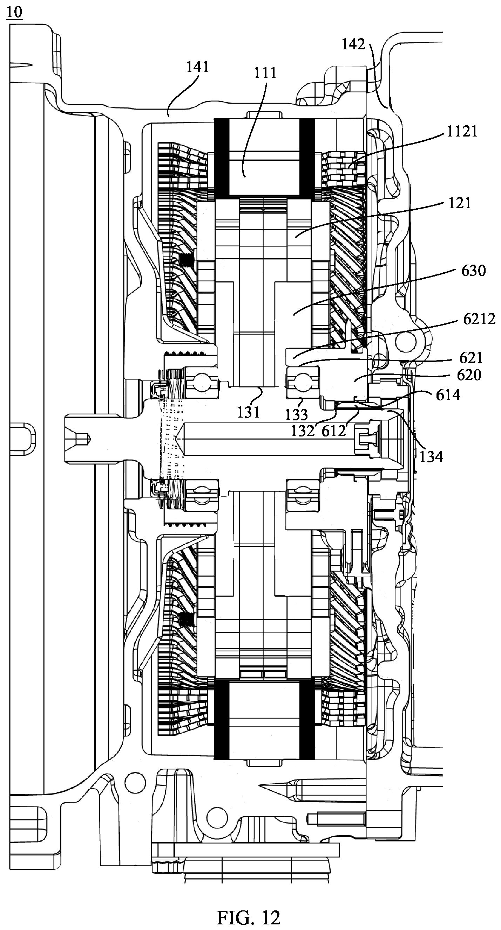

FIG. 10 is a diagram of a housing of a mechanical pump according to an embodiment of this application. FIG. 11 is a diagram of a motor shaft according to an embodiment of this application. FIG. 12 is a diagram of another range-extended powertrain according to an embodiment of this application. As shown in FIG. 10, the mechanical pump 600 further includes a housing 620. The housing 620 of the mechanical pump 600 includes a driven internal gear container 614, and the driven internal gear container 614 is configured to accommodate the driven internal gear 611 of the mechanical pump 600. Refer to FIG. 11 and FIG. 12. The motor shaft 130 includes two shaft segments 131 and 132. The shaft segment 131 in the two shaft segments 131 and 132 of the motor shaft 130 is configured to fasten the directly-connected rotor iron core 1211, and the other shaft segment 132 in the two shaft segments 131 and 132 is configured to extend into the driven internal gear container 614 to fasten the driving external gear 612. In a rotation process of the motor shaft 130, the driving external gear 612 can be driven to rotate. In this way, the driving external gear 612 engages with the driven internal gear 611 in a rotation process, to implement oil absorption of the mechanical pump 600.

In the range-extended powertrain 10 provided in this embodiment of this application, the motor shaft 130 of the generator 100 serves as a transmission shaft of the mechanical pump 600. That is, the motor shaft 130 of the generator 100 and the transmission shaft of the mechanical pump 600 are the same shaft. In addition, the driving external gear 612 of the mechanical pump 600 is directly fastened and sleeved on the motor shaft 130, so that a differential or a gear group does not need to be separately disposed to be in transmission connection to the motor shaft 130 of the generator 100 and the transmission shaft of the mechanical pump 600. This reduces space occupied by a transmission structure of the mechanical pump 600, and reduces increase, caused by the mechanical pump 600, in an axial size of the range-extended powertrain 10, which is conducive to taking both miniaturization and low costs of the range-extended powertrain 10 into consideration.

It should be understood that the axial size of the range-extended powertrain 10 may be understood as a size of the range-extended powertrain 10 in the axial direction of the generator 100.

In an embodiment, the driving external gear 612 and the motor shaft 130 are of an integrated structure, and the motor shaft 130 may also be referred to as a gear shaft. This is conducive to improving NVH performance of the range-extended powertrain.

As shown in FIG. 8, the housing 620 of the mechanical pump 600 includes a bearing container 621, the bearing container 621 is distributed on a side that is of the driven internal gear container 614 and that faces the rotor iron core 121, and the bearing container 621 is configured to fasten an outer ring of a bearing of the motor shaft 130. As shown in FIG. 11, the motor shaft 130 further includes a shaft segment 133, and the shaft segment 133 of the motor shaft 130 is configured to fasten an inner ring of the bearing of the motor shaft 130.

As shown in FIG. 8, the bearing container 621 includes an opening 6211, a wall 6212, and a bottom 6213. The opening 6211 of the bearing container 621 faces the rotor iron core 121, and the opening 6211 of the bearing container 621 and the bottom 6213 of the bearing container 621 are arranged oppositely in the axial direction of the generator 100. In the axial direction of the generator 100, the wall 6212 of the bearing container 621 protrudes from a side that is of the housing 620 of the mechanical pump 600 and that faces the rotor iron core 121.

In an embodiment, the bearing container 621 and the housing 620 of the mechanical pump 600 are of an integrated structure. In this way, a processing process of the mechanical pump 600 can be simplified. In an embodiment, the bearing container 621 and the housing 620 of the mechanical pump 600 may be fastened by using a fastening piece, or through welding, bonding, or other fastening manners. The fastening piece includes a bolt, a screw, a rivet, or the like.

In an embodiment, as shown in FIG. 8, the bottom 6213 of the bearing container 621 includes an oil outlet O. The oil outlet O is configured to communicate with the bearing container 621 and the pressure oil cavity 613 of the mechanical pump 600, and the oil outlet O is configured to transfer oil in the pressure oil cavity 613 of the mechanical pump 600 to the bearing of the motor shaft 130. The bearing container 621 is integrated into the housing 620 of the mechanical pump 600, so that oil in the pressure oil cavity 613 of the mechanical pump 600 is introduced into the bearing container 621 through an internal oil channel of the housing 620 of the mechanical pump 600, to lubricate and cool the bearing in the bearing container 621. In this way, a lubricating and cooling oil path of the bearing in the bearing container 621 can be simplified, and the lubricating and cooling oil path of the bearing in the bearing container 621 does not additionally increase the axial size of the range-extended powertrain 10.

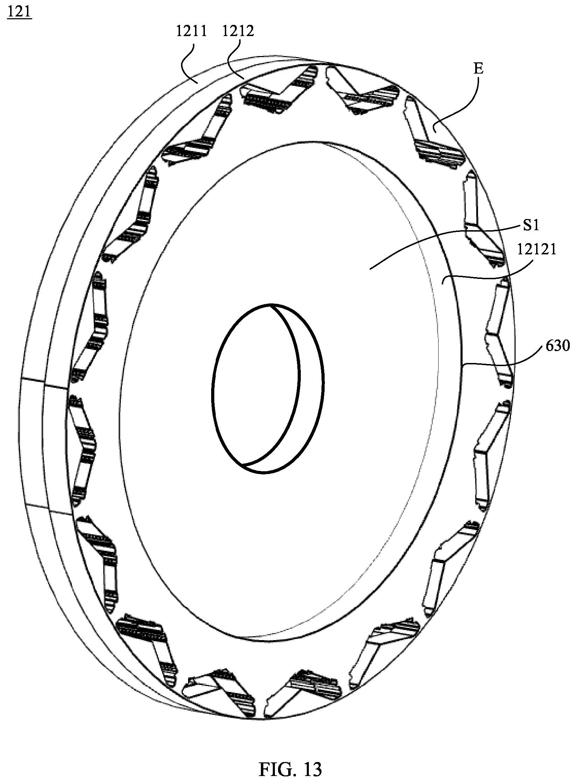

FIG. 13 is a diagram of another rotor iron core according to an embodiment of this application. As shown in FIG. 13, an end face E of the rotor iron core 121 includes a mechanical pump accommodation container 630, and the mechanical pump accommodation container 630 is concave toward a side facing away from the mechanical pump 600. Refer to FIG. 12. The wall 6212 of the bearing container 621 is configured to extend into the mechanical pump accommodation container 630.

The mechanical pump accommodation container 630 is disposed on the end face E of the rotor iron core 121, and the protruding bearing container 621 is placed in the mechanical pump accommodation container 630, to reduce increase, caused by the bearing container 621 in the housing 620 of the mechanical pump 600, in the axial size of the range-extended powertrain 10.

In addition, the bearing container 621 configured to fasten the bearing of the motor shaft 130 is integrated into the housing 620 of the mechanical pump 600, and the housing 620 and the bearing container 621 of the mechanical pump 600 can be made of a same material. Usually, the housing 620 of the mechanical pump 600 is made of a cast iron material. In other words, the bearing container 621 integrated into the housing 620 of the mechanical pump 600 is also made of the cast iron material, so that rigidity of the bearing container 621 can be improved. In this way, no steel sleeve needs to be disposed separately, which can reduce costs of the range-extended powertrain 10, and is also conducive to improving NVH performance of the range-extended powertrain.

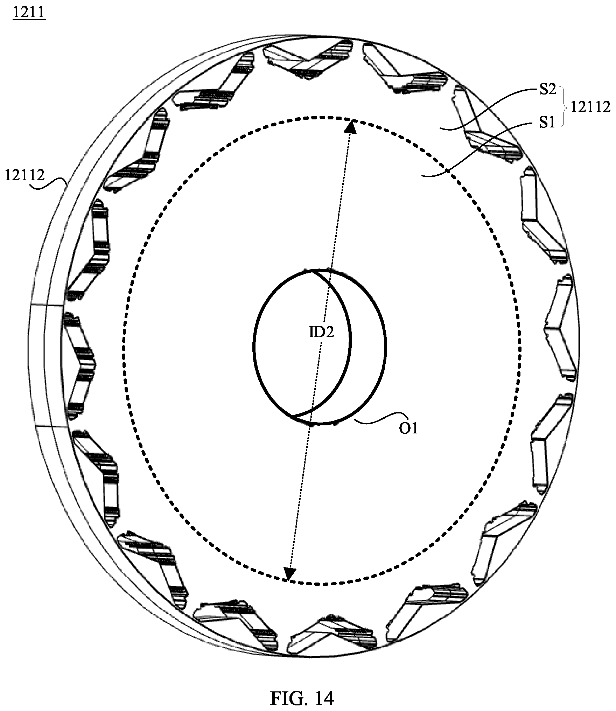

FIG. 14 is a diagram of another directly-connected rotor iron core according to an embodiment of this application. As shown in FIG. 14, the directly-connected rotor iron core 1211 includes a side surface 12112 facing the finned rotor iron core 1212, and the side surface 12112 of the directly-connected rotor iron core 1211 includes an unshielded area S1 and a shielded area S2. The unshielded area S1 is an area that is of the side surface 12112 of the directly-connected rotor iron core 1211 in the axial direction of the generator 100 and that is not shielded by the finned rotor iron core 1212 arranged adjacent to the side surface 12112 of the directly-connected rotor iron core 1211. The shielded area S2 is an area that is of the side surface 12112 of the directly-connected rotor iron core 1211 in the axial direction of the generator 100 and that is shielded by the finned rotor iron core 1212 arranged adjacent to the side surface 12112 of the directly-connected rotor iron core 1211.

Based on the related descriptions in FIG. 4 and FIG. 5, because the inner diameter ID1 of the directly-connected rotor iron core 1211 is less than the inner diameter ID2 of the finned rotor iron core 1212, with reference to FIG. 13, the inner circumferential surface 12111 of the finned rotor iron core 1212 serves as the wall 6212 of the mechanical pump accommodation container 630, and the unshielded area S1 of the side surface 12112 of the rotor iron core 121 serves as the bottom 6213 of the bearing container 621. In this way, the inner circumferential surface 12111 of the finned rotor iron core 1212 and the unshielded area S1 of the side surface 12112 of the rotor iron core 121 form the mechanical pump accommodation container 630. In this way, internal space of the rotor iron core 121 can be fully utilized.

In an embodiment, a depth of the mechanical pump accommodation container 630 in the axial direction of the generator 100 is greater than or equal to a length by which the wall 6212 of the bearing container 621 protrudes from the housing 620 of the mechanical pump 600. In this way, the internal space of the rotor iron core 121 is fully utilized, to completely bury, in the mechanical pump accommodation container 630 of the rotor iron core 121, the wall 6212 of the bearing container 621 integrated into the housing 620 of the mechanical pump 600, so that the bearing container 621 does not additionally increase the axial size of the range-extended powertrain 10.

In an embodiment, as shown in FIG. 12, the housing 620 of the mechanical pump 600 is configured to accommodate a wire winding pack 1121 of the stator winding 112. In this way, the internal space of the wire winding pack 1121 of the stator winding 112 is fully utilized, to accommodate the housing 620 of the mechanical pump 600 in the wire winding pack 1121, so that the housing of the mechanical pump 600 does not additionally increase the axial size of the range-extended powertrain 10.

In an embodiment, as shown in FIG. 12, the mechanical pump 600 is accommodated in the motor cavity formed by the two housings 141 and 142 of the range-extended powertrain 10. The mechanical pump 600 is disposed in the motor cavity of the generator 100, so that the housing 142 arranged adjacent to the mechanical pump 600 can serve as a housing for forming the motor cavity, and also serve as a sealing cover of the mechanical pump 600. In this way, sealing performance of the mechanical pump 600 can be ensured to facilitate stable running of the mechanical pump 600, and the axial size of the range-extended powertrain 10 is not additionally increased.

In an embodiment, as shown in FIG. 10, the housing 620 of the mechanical pump 600 includes a surface 622 facing the housing 142 of the range-extended powertrain 10. The surface 622 includes an oil inlet 6221 and an oil outlet 6222. The oil inlet 6221 of the housing 620 of the mechanical pump 600 is configured to communicate with the oil absorption cavity 614 of the mechanical pump 600, and the oil outlet 6222 of the housing 620 of the mechanical pump 600 is configured to communicate with an internal oil channel of the housing 142 and the pressure oil cavity 613 of the mechanical pump 600.

The oil inlet 6221 and the oil outlet 6222 of the mechanical pump 600 are disposed on the surface 622 that is of the housing 620 of the mechanical pump 600 and that faces the housing 142 of the range-extended powertrain 10, so that an oil path between the mechanical pump 600 and the housing 142 of the range-extended powertrain 10 can be shortened, and lubrication and cooling of the range-extended powertrain 10 are accelerated.

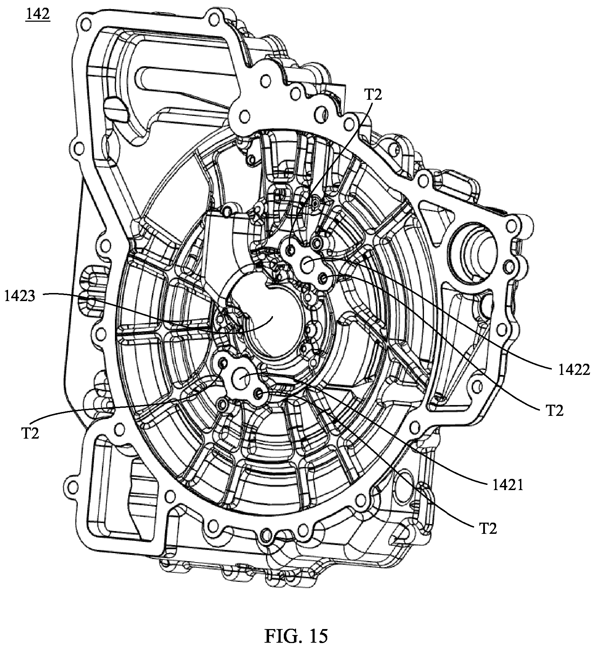

FIG. 15 is a diagram of a housing of a range-extended powertrain according to an embodiment of this application. In an embodiment, the housing 142 of the range-extended powertrain 10 includes an oil outlet 1421 and an oil inlet 1422. The oil outlet 1421 of the housing 142 is configured to communicate with an internal oil channel of the housing 142 and the oil inlet 6221 of the housing 620 of the mechanical pump 600. Oil absorbed by the mechanical pump 600 from the oil storage structure 143 flows into the oil inlet 6221 of the housing 620 through the internal oil channel of the housing 142 and the oil outlet 1421 of the housing 142 in sequence. The oil inlet 1422 of the housing 142 is configured to communicate with the oil outlet 6222 of the mechanical pump 600 and another internal oil channel of the housing 142. Oil in the pressure oil cavity 613 of the mechanical pump 600 flows into the another internal oil channel of the housing 142 through the oil outlet 6222 of the mechanical pump 600 and the oil inlet 1422 of the housing 142 in sequence, and then flows into the lubricating and cooling system of the range-extended powertrain 10.

In an embodiment, the housing 620 of the mechanical pump 600 is fastened to the housing 142 of the range-extended powertrain 10. For example, the housing 620 of the mechanical pump 600 includes a plurality of groups of fastening holes T1, each group of fastening holes T1 includes a plurality of fastening holes T1, and each fastening hole T1 is configured to pass through one fastening piece. As shown in FIG. 10, the housing 620 of the mechanical pump 600 includes two groups of fastening holes T1, and each group of fastening holes T1 includes two fastening holes T1. The housing 142 of the range-extended powertrain 10 includes a plurality of groups of threaded holes T2, and each group of threaded holes T2 includes a plurality of threaded holes T2. As shown in FIG. 15, the housing 142 of the range-extended powertrain 10 includes two groups of threaded holes T2, and each group of threaded holes T2 includes two threaded holes T2. After each fastening piece passes through the fastening hole T1, each fastening piece is embedded in each threaded hole T2 of the housing 142 of the range-extended powertrain 10, and each threaded hole T2 of the housing 142 of the range-extended powertrain 10 engages with an external thread of the fastening piece, to fasten the housing 620 of the mechanical pump 600 to the housing 142 of the range-extended powertrain 10, so that displacement of the housing 620 of the mechanical pump 600 in a traveling process of the electric vehicle 1 is reduced, the driven internal gear 611 of the mechanical pump 600 is prevented from being incapable of engaging with the driving external gear 612, and reliability of the mechanical pump 600 is improved.

In an embodiment, as shown in FIG. 15, a plurality of fastening holes T1 in one group of fastening holes T1a in the two groups of fastening holes T1 are configured to surround the oil inlet 6221 of the mechanical pump 600. Fastening pieces in the group of fastening holes T1a can enable the oil inlet 6221 of the mechanical pump 600 to be closely attached to the housing 142 of the range-extended powertrain 10, so that oil extracted by the mechanical pump 600 does not leak in a process of entering the housing 620 of the mechanical pump 600. In this way, oil utilization is improved.

In an embodiment, as shown in FIG. 15, a plurality of fastening holes T1 in the other group of fastening holes T1b in the two groups of fastening holes T1 are configured to surround the oil outlet 6222 of the mechanical pump 600. Fastening pieces in the other group of fastening holes Tlb can enable the oil outlet 6222 of the mechanical pump 600 to be closely attached to the housing 142 of the range-extended powertrain 10, so that oil in the pressure oil cavity 613 of the mechanical pump 600 does not leak in a process of entering the internal oil channel of the housing 142 of the range-extended powertrain 10. In this way, oil utilization is improved.

In an embodiment, as shown in FIG. 15, the housing 142 of the range-extended powertrain 10 includes a resolver bore 1423 that runs through the housing 142 in the axial direction of the generator 100. The resolver bore 1423 is configured to fasten a stator of a resolver sensor. A center hole of the stator of the resolver sensor is configured to accommodate a rotor of the resolver sensor. As shown in FIG. 11, a shaft segment 134 of the motor shaft 130 is exposed from the driven internal gear container 614, and the shaft segment 134 of the motor shaft 130 is configured to fasten the rotor of the resolver sensor. In this way, the housing 142 of the range-extended powertrain 10 can be fully utilized, to reduce the axial size of the range-extended powertrain 10, which is conducive to miniaturization of the range-extended powertrain 10.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A range-extended powertrain, wherein the range-extended powertrain comprises a mechanical pump and a generator, a housing of the mechanical pump comprises a driven internal gear container, the driven internal gear container is configured to accommodate a driven internal gear of the mechanical pump, the driven internal gear of the mechanical pump engages with a driving external gear of the mechanical pump, and the driving external gear of the mechanical pump is distributed on an inner side of the driven internal gear of the mechanical pump, wherein
a motor shaft of the generator is configured to fasten a motor rotor of the generator and extend into the driven internal gear container to fasten the driving external gear of the mechanical pump.

2. The range-extended powertrain according to claim 1, wherein an end face of a rotor iron core of the motor rotor comprises a mechanical pump accommodation container, the mechanical pump accommodation container is concave toward a side facing away from the mechanical pump, the housing of the mechanical pump comprises a bearing container, the bearing container is distributed on a side that is of the driven internal gear container and that faces the rotor iron core, and the bearing container is configured to fasten an outer ring of a bearing of the motor shaft, wherein
in an axial direction of the generator, a wall of the bearing container protrudes from a side that is of the housing of the mechanical pump and that faces the rotor iron core, and the wall of the bearing container is configured to extend into the mechanical pump accommodation container.

3. The range-extended powertrain according to claim 2, wherein a pressure oil cavity of the mechanical pump is formed between the driven internal gear of the mechanical pump and the driving external gear of the mechanical pump, a bottom of the bearing container comprises an oil outlet, and the oil outlet is configured to transfer oil in the pressure oil cavity of the mechanical pump to the bearing of the motor shaft.

4. The range-extended powertrain according to claim 2 or 3, wherein a depth of the mechanical pump accommodation container in the axial direction of the generator is greater than or equal to a length by which the wall of the bearing container protrudes from the housing of the mechanical pump.

5. The range-extended powertrain according to any one of claims 1 to 4, wherein a center hole of a stator iron core of the generator is configured to accommodate the rotor iron core, a wire winding pack of the generator is exposed from the stator iron core in the axial direction of the generator, and the housing of the mechanical pump is configured to accommodate the wire winding pack of a stator winding.

6. The range-extended powertrain according to any one of claims 1 to 5, wherein two housings of the range-extended powertrain enclose each other to form a motor cavity, the motor rotor and the mechanical pump are accommodated in the motor cavity, and the housing of the mechanical pump and one housing of the two housings are adjacently arranged and fastened.

7. The range-extended powertrain according to claim 6, wherein the one housing comprises a resolver bore that runs through the one housing in the axial direction of the generator, the resolver bore is configured to fasten a stator of a resolver sensor, a center hole of the stator of the resolver sensor is configured to accommodate a rotor of the resolver sensor, a shaft segment of the motor shaft is exposed from the driven internal gear container, and the shaft segment of the motor shaft is configured to fasten the rotor of the resolver sensor.

8. The range-extended powertrain according to claim 6 or 7, wherein the housing of the mechanical pump comprises a surface facing the one housing, the surface comprises an oil inlet and an oil outlet, the oil inlet is configured to communicate with an oil absorption cavity of the mechanical pump, and the oil outlet is configured to communicate with an internal oil channel of the one housing and the pressure oil cavity of the mechanical pump.

9. The range-extended powertrain according to claim 8, wherein the housing of the mechanical pump further comprises two groups of fastening holes, the two groups of fastening holes are configured to fasten the housing of the mechanical pump to the one housing, and each group of fastening holes comprises a plurality of fastening holes, wherein
the plurality of fastening holes in one group of fastening holes are configured to surround the oil inlet, and the plurality of fastening holes in the other group of fastening holes are configured to surround the oil outlet.

10. A range-extended electric vehicle, wherein the range-extended electric vehicle comprises wheels, a battery pack, and the range-extended powertrain according to any one of claims 1 to 9, and the generator is configured to supply power to the battery pack or a drive motor of the range-extended powertrain.
